# EUROPÄISCHE PATENTSCHRIFT

(11) **EP 4 341 977 B1**
(45) Veröffentlichungstag und Bekanntmachung des Hinweises auf die Patenterteilung: **29.04.2026**
(21) Anmeldenummer: 22741709.4
(22) Anmeldetag: 28.06.2022
(51) Int. Cl.: H01H 33/662, H01H 33/59, H02H 3/033

(54) **VAKUUMSCHALTEINHEIT UND VAKUUMSCHALTER**
VACUUM SWITCH ASSEMBLY AND A VACUUM SWITCH
ENSEMBLE DE COMMUTATION À VIDE ET COMMUTATEUR À VIDE

(30) Priorität: 23.07.2021 DE 102021207964
(43) Veröffentlichungstag der Anmeldung: 27.03.2024
(73) Patentinhaber: Siemens Energy Global GmbH & Co. KG, 91058 Erlangen (DE)
(72) Erfinder: BENKERT, Katrin, 90571 Schwaig (DE); GOEBELS, Tobias Alexander, 47661 Issum (DE); NIKOLIC, Paul Gregor, 91058 Erlangen (DE)
(86) Internationale Anmeldenummer: PCT/EP2022/067708
(87) Internationale Veröffentlichungsnummer: WO 2023/001502

(56) Entgegenhaltungen:
- WO-A1-02/097839
- WO-A1-2020/025407
- CN-A- 112 435 889
- US-A1- 2017 287 662

## Beschreibung

Die Erfindung betrifft eine Vakuumschalteinheit eines Vakuumschalters und einen Vakuumschalter.

Vakuumschalter, wie z. **B.** aus der WC 2020/025407 A1, der WO 02/097839 A1 und der US 2017/287662 A1 bekannt, sind Leistungsschalter, bei denen relativ zueinander bewegbare Schaltkontaktelemente in einer Vakuumschaltröhre (Vakuumschaltkammer) angeordnet sind. Aus der CN 112 435 889 A, ist eine Vakuumschalteinheit bekannt, die dem Oberbegriff des Anspruchs 1 entspricht. Vakuumschalter sind insbesondere wartungsarm, langlebig und einfach antreibbar. Um Spannungsanforderungen zu erfüllen, kann ein Vakuumschalter mehrere Vakuumschaltröhren aufweisen, deren Schaltstrecken elektrisch in Reihe geschaltet sind. In diesem Fall wird (bei geöffneten Schaltstrecken der Vakuumschaltröhren) eine den Vakuumschaltröhren angepasste Spannungsaufteilung auf die Vakuumschaltröhren angestrebt, um eine Überlastung einzelner Vakuumschaltröhren zu vermeiden. Beispielsweise wird bei mehreren gleichartig ausgebildeten hintereinander geschalteten Vakuumschaltröhren eine möglichst gleichmäßige Spannungsaufteilung auf die Vakuumschaltröhren angestrebt.

Um eine angestrebte Spannungsaufteilung auf die Vakuumschaltröhren zu erreichen, werden beispielsweise passive elektrische Bauelemente wie Steuerkondensatoren und/oder Steuerwiderstände parallel zu den Vakuumschaltröhren geschaltet. Diese Bauelemente vergrößern jedoch den für einen Vakuumschalter benötigten Bauraum. Insbesondere bei einem Vakuumschalter mit gereinigter und entfeuchteter Druckluft als die Vakuumschaltröhren umgebendem Isoliermedium und herkömmlichen Steuerkondensatoren sind relativ große Isolationsabstände zwischen einer Vakuumschaltröhre und einem Steuerkondensator sowie zwischen einem Steuerkondensator und einem metallischen Schaltergehäuse des Vakuumschalters notwendig, da die Druckluft eine relativ geringe elektrische Durchschlagfestigkeit (im Vergleich zu anderen Isoliergasen wie Schwefelhexafluorid) aufweist.

Der Erfindung liegt die Aufgabe zugrunde, eine Spannungssteuerung in einem Vakuumschalter durch Steuerkondensatoren mit geringem Platzbedarf zu ermöglichen.

Die Aufgabe wird erfindungsgemäß durch eine Vakuumschalteinheit mit den Merkmalen des Anspruchs 1 und einen Vakuumschalter mit den Merkmalen des Anspruchs 13 gelöst.

Vorteilhafte Ausgestaltungen der Erfindung sind Gegenstand der Unteransprüche.

Eine erfindungsgemäße Vakuumschalteinheit eines Vakuumschalters umfasst eine Vakuumschaltröhre, eine die Vakuumschaltröhre umgebende Isolierhülse, die rohrartig um eine Längsachse der Vakuumschaltröhre verläuft und aus einem Isolierstoff gefertigt ist, und mehrere in die Isolierhülse integrierte Kondensatorelektroden.

Eine erfindungsgemäße Vakuumschalteinheit weist also anstelle eines herkömmlichen Steuerkondensators oder mehrerer derartiger Steuerkondensatoren eine Vielzahl von Kondensatorelektroden auf, die in eine die Vakuumschaltröhre umgebende Isolierhülse integriert sind. Mit anderen Worten wird erfindungsgemäß die Kapazität herkömmlicher Steuerkondensatoren auf in die Isolierhülse integrierte Kondensatorelektroden aufgeteilt. Dadurch können gegenüber herkömmlichen Steuerkondensatoren die Isolationsabstände der Kondensatorelektroden von der Vakuumschaltröhre und einem metallischen Schaltergehäuse des Vakuumschalters reduziert werden, was sich bauraumsparend insbesondere bei einer Befüllung des Schaltergehäuses mit gereinigter und entfeuchteter Druckluft als Isoliergas auswirkt. Die Isolierhülse wirkt außerdem vorteilhaft als Feststoffisolator, der die Wirkung des Isoliergases unterstützt.

Bei einer Ausgestaltung der erfindungsgemäßen Vakuumschalteinheit verlaufen die Kondensatorelektroden jeweils ringförmig oder teilringförmig um die Längsachse der Vakuumschaltröhre. Dadurch wird vorteilhaft eine gleichmäßige Verteilung der Kapazitäten der Kondensatorelektroden um die Vakuumschaltröhre herum realisiert.

Bei einer weiteren Ausgestaltung der erfindungsgemäßen Vakuumschalteinheit werden von Kondensatorelektroden Elektrodenpaare konzentrisch verlaufender Kondensatorelektroden mit einander zugewandten Elektrodenoberflächen gebildet und die Elektrodenpaare konzentrisch verlaufender Kondensatorelektroden sind bezogen auf die Längsachse der Vakuumschaltröhre axial voneinander beabstandet. Beispielsweise wird jedes Elektrodenpaar konzentrisch verlaufender Kondensatorelektroden von einer Kondensatorelektrode, die an einer der Vakuumschaltröhre zugewandten Oberfläche der Isolierhülse verläuft, und einer Kondensatorelektrode, die an einer von der Vakuumschaltröhre abgewandten Oberfläche der Isolierhülse verläuft, gebildet. Dabei werden die konzentrisch verlaufenden Kondensatorelektroden beispielsweise von auf die Isolierhülse aufgebrachten elektrisch leitfähigen Lackschichten gebildet.

Bei der vorgenannten Ausgestaltung der erfindungsgemäßen Vakuumschalteinheit werden von wenigstens einem Teil der Kondensatorelektroden ringförmige oder teilringförmige Kondensatoren mit konzentrischen Elektrodenoberflächen gebildet, die axial beabstandet sind. Eine Anordnung der Kondensatorelektroden an sich gegenüberliegenden Oberflächen der Isolierhülse vereinfacht vorteilhaft die Integration der Kondensatorelektroden in die Isolierhülse, insbesondere wenn die Kondensatorelektroden von elektrisch leitfähigen Lackschichten gebildet werden.

Bei einer weiteren Ausgestaltung der erfindungsgemäßen Vakuumschalteinheit verlaufen Kondensatorelektroden bezogen auf die Längsachse der Isolierhülse axial voneinander beabstandet innerhalb der Isolierhülse und weisen einander zugewandte Elektrodenoberflächen auf. Bei dieser Ausgestaltung der erfindungsgemäßen Vakuumschalteinheit werden also von wenigstens einem Teil der Kondensatorelektroden Kondensatoren mit axial voneinander beabstandeten Elektrodenoberflächen gebildet.

Bei einer weiteren Ausgestaltung der erfindungsgemäßen Vakuumschalteinheit bilden Elektrodenpaare von Kondensatorelektroden mit einander zugewandten Elektrodenoberflächen Kondensatoren, die durch in die Isolierhülse integrierte elektrische Leitungen in Reihe geschaltet sind. Bei dieser Ausgestaltung der erfindungsgemäßen Vakuumschalteinheit werden also neben den Kondensatorelektroden elektrische Leitungen in die Isolierhülse integriert, die von den Kondensatorelektroden gebildete Kondensatoren elektrisch in Reihe schalten. Analog können von Kondensatorelektroden gebildete Kondensatoren durch in die Isolierhülse integrierte elektrische Leitungen parallel zueinander geschaltet sein, insbesondere wenn die Kondensatorelektroden dieser Kondensatoren teilringförmig ausgebildet sind.

Bei einer weiteren Ausgestaltung der erfindungsgemäßen Vakuumschalteinheit ist in die Isolierhülse wenigstens ein elektrischer Widerstand integriert, der durch in die Isolierhülse integrierte elektrische Leitungen in Reihe oder parallel zu wenigstens einem von zwei Kondensatorelektroden gebildeten Kondensator geschaltet ist. Bei dieser Ausgestaltung der erfindungsgemäßen Vakuumschalteinheit wird also zusätzlich zu den Kondensatorelektroden wenigstens ein elektrischer Widerstand in die Isolierhülse integriert, der in Reihe oder parallel zu wenigstens einem dieser Kondensatoren geschaltet ist.

Bei einer weiteren Ausgestaltung der erfindungsgemäßen Vakuumschalteinheit weist die Vakuumschaltröhre wenigstens eine Schirmelektrode auf, die mit einer Kondensatorelektrode elektrisch leitend verbunden und/oder kapazitiv elektrisch gekoppelt ist. Diese Ausgestaltung der erfindungsgemäßen Vakuumschalteinheit sieht also eine direkte und/oder kapazitive Kopplung von in die Isolierhülse integrierten Kondensatorelektroden mit elektrischen Potentialen vor, auf denen Schirmelektroden der Vakuumschaltröhre liegen.

Bei einer weiteren Ausgestaltung der erfindungsgemäßen Vakuumschalteinheit ist die Isolierhülse aus einem Thermoplast wie Polyoxymethylen (POM), Polyethylenterephthalat (PETP), Polyvinylidenfluorid (PVDF) oder Polyamid (PA6.6) oder aus Epoxidharz, das einen die Permittivität erhöhenden Füllstoff wie Bariumtitanat (BaTiO₃) aufweist, gefertigt. Bei dieser Ausgestaltung der erfindungsgemäßen Vakuumschalteinheit ist die Isolierhülse durch ein konventionelles Verfahren, beispielsweise durch Spritzgießen, gefertigt. Diese Ausgestaltung ist bei einer einfachen Integration der Kondensatorelektroden in die Isolierhülse, beispielsweise an deren Oberflächen, bevorzugt.

Bei einer zur vorgenannten Ausgestaltung alternativen Ausgestaltung der erfindungsgemäßen Vakuumschalteinheit ist die Isolierhülse zusammen mit den Kondensatorelektroden durch einen 3D-Druck gefertigt. Beispielsweise wird die Isolierhülse aus einem Polylactid (PLA), Acrylnitril-Butadien-StyrolCopolymer (ABS), PVDF oder chlorierten Polyethylen (CPE) gedruckt und die Kondensatorelektroden werden aus einem elektrisch leitfähigen Filament gedruckt. Bei dieser Ausgestaltung der erfindungsgemäßen Vakuumschalteinheit werden die Isolierhülse und die Kondensatorelektroden gemeinsam durch einen 3D-Druck gefertigt. Diese Ausgestaltung ist bei geometrisch komplexen Ausführungen der Isolierhülse und/oder Kondensatorelektroden bevorzugt, insbesondere bei in die Isolierhülse eingebetteten Kondensatorelektroden.

Bei der erfindungsgemäßen Vakuumschalteinheit weisen wenigstens ein Bereich einer der Isolierhülse zugewandten Oberfläche der Vakuumschaltröhre und/oder wenigstens ein Bereich einer der Vakuumschaltröhre zugewandten Oberfläche der Isolierhülse eine Beschichtung auf, die ein elektrisches Feld zwischen der Isolierhülse und der Vakuumschaltröhre homogenisiert. Beispielsweise wird eine derartige Beschichtung aus einem halbleitenden Material gefertigt. Diese Ausgestaltung der erfindungsgemäßen Vakuumschalteinheit ermöglicht die Vermeidung oder wenigstens Reduzierung von Teilentladungen zwischen der Isolierhülse und der Vakuumschaltröhre.

Bei einer weiteren Ausgestaltung der erfindungsgemäßen Vakuumschalteinheit ist die Isolierhülse aus wenigstens zwei Hülsenteilen zusammengesetzt. Diese Ausgestaltung der erfindungsgemäßen Vakuumschalteinheit ist vorteilhaft, wenn der Außendurchmesser der Vakuumschaltröhre entlang deren Längsachse variiert. Dann ermöglicht eine Zusammensetzung der Isolierhülse aus mehreren Hülsenteilen eine Montage einer Isolierhülse mit einer der Form der Vakuumschaltröhre angepassten Geometrie.

Ein erfindungsgemäßer Vakuumschalter weist wenigstens eine erfindungsgemäße Vakuumschalteinheit auf. Insbesondere kann der Vakuumschalter mehrere erfindungsgemäße Vakuumschalteinheiten aufweisen, deren Schaltstrecken elektrisch in Reihe geschaltet sind. Wie oben bereits ausgeführt wurde, ist bei Vakuumschaltern mit mehreren Vakuumschaltröhren, deren Schaltstrecken elektrisch in Reihe geschaltet sind, eine Spannungsaufteilung auf die Vakuumschaltröhren wichtig, die eine Überlastung einzelner Vakuumschaltröhren vermeidet. Daher eignen sich erfindungsgemäße Vakuumschalteinheiten insbesondere für derartige Vakuumschalter mit mehreren Vakuumschaltröhren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Schnittdarstellung eines ersten Ausführungsbeispiels einer Vakuumschalteinheit,
- FIG 2: einen Ausschnitt einer Schnittdarstellung eines zweiten Ausführungsbeispiels einer Vakuumschalteinheit,
- FIG 3: eine Schnittdarstellung eines dritten Ausführungsbeispiels einer Vakuumschalteinheit,
- FIG 4: einen Ausschnitt einer Schnittdarstellung eines vierten Ausführungsbeispiels einer Vakuumschalteinheit, und
- FIG 5: ein Blockdiagramm eines Vakuumschalters mit zwei Vakuumschalteinheiten.

Einander entsprechende Teile sind in den Figuren mit denselben Bezugszeichen versehen.

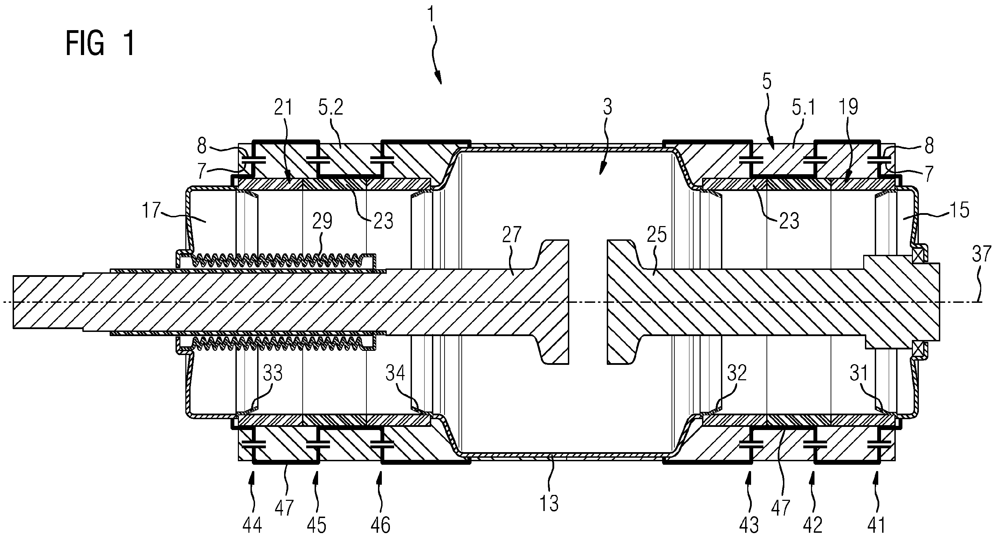

Figur 1 (FIG 1) zeigt eine Schnittdarstellung eines ersten Ausführungsbeispiels einer erfindungsgemäßen Vakuumschalteinheit 1 eines Vakuumschalters. Die Vakuumschalteinheit 1 umfasst eine Vakuumschaltröhre 3, eine die Vakuumschaltröhre 3 umgebende Isolierhülse 5 und mehrere in die Isolierhülse 5 integrierte Kondensatorelektroden 7, 8.

Die Vakuumschaltröhre 3 weist ein Schaltröhrengehäuse auf, das von einem metallischen Mittelbereich 13, zwei metallischen Endbereichen 15, 17 und zwei Isolationsbereichen 19, 21 gebildet wird. Der Mittelbereich 13 weist einen größeren Durchmesser als die Endbereiche 15, 17 und die Isolationsbereiche 19, 21 auf und ist zwischen den Isolationsbereichen 19, 21 angeordnet. Die Isolationsbereiche 19, 21 sind jeweils aus einem elektrisch nichtleitenden Material, beispielsweise aus einem keramischen Material, gefertigt. In dem gezeigten Ausführungsbeispiel ist jeder Isolationsbereich 19, 21 aus drei ringförmigen Isolationssegmenten 23 zusammengesetzt. Die Endbereiche 15, 17 bilden sich gegenüberliegende Stirnseiten des Schaltröhrengehäuses.

Ferner weist die Vakuumschaltröhre 3 zwei elektrisch leitfähige Schaltkontaktelemente 25, 27 auf. Dabei ist ein erstes Schaltkontaktelement 25 fest mit einem ersten Endbereich 15 des Schaltröhrengehäuses verbunden und verläuft durch einen ersten Isolationsbereich 19 in den Mittelbereich 13 des Schaltröhrengehäuses. Das zweite Schaltkontaktelement 27 ist durch einen nicht dargestellten Mechanismus relativ zu dem ersten Schaltkontaktelement 25 zwischen einer ersten Schaltstellung, in der sich die Schaltkontaktelemente 25, 27 berühren, und einer in Figur 1 gezeigten zweiten Schaltstellung, in der die Schaltkontaktelemente 25, 27 voneinander beabstandet sind, bewegbar. Das zweite Schaltkontaktelement 27 ist durch eine Öffnung in dem zweiten Endbereich 17 aus dem Schaltröhrengehäuse herausgeführt und ragt durch den zweiten Isolationsbereich 21 in den Mittelbereich 13 des Schaltröhrengehäuses hinein. An dem zweiten Schaltkontaktelement 27 ist ein Ende eines metallischen Faltenbalgs 29 befestigt, dessen anderes Ende mit dem zweiten Endbereich 17 des Schaltröhrengehäuses verbunden ist und der zwischen seinen Enden das zweite Schaltkontaktelement 27 umgibt.

Ferner weist die Vakuumschaltröhre 3 mehrere Schirmelektroden 31 bis 34 auf. Eine erste Schirmelektrode 31 ist an dem ersten Endbereich 15 des Schaltröhrengehäuses angeordnet, ragt von dem ersten Endbereich 15 aus in das Innere des Schaltröhrengehäuses hinein und umgibt dort ringförmig das erste Schaltkontaktelement 25. Eine zweite Schirmelektrode 32 ist an einem dem ersten Endbereich 15 zugewandten Ende des Mittelbereichs 13 des Schaltröhrengehäuses angeordnet und umgibt dort ringförmig das erste Schaltkontaktelement 25.

Eine dritte Schirmelektrode 33 ist an dem zweiten Endbereich 17 des Schaltröhrengehäuses angeordnet, ragt von dem zweiten Endbereich 17 aus in das Innere des Schaltröhrengehäuses hinein und umgibt dort ringförmig das zweite Schaltkontaktelement 27 und den Faltenbalg 29. Eine vierte Schirmelektrode 34 ist an einem dem zweiten Endbereich 17 zugewandten Ende des Mittelbereichs 13 des Schaltröhrengehäuses angeordnet und umgibt dort ringförmig das zweite Schaltkontaktelement 25.

Die Innenoberfläche des Mittelbereichs 13 des Schaltröhrengehäuses und die Schirmelektroden 32, 34 bilden insbesondere Dampfschirme, die von den Schaltkontaktelementen 25, 27 verdampfendes Material aufnehmen und dadurch verhindern, dass sich dieses Material an den Innenwänden der Isolationsbereiche 19, 21 absetzt und deren elektrisch isolierende Wirkung beeinträchtigt.

Die Isolierhülse 5 verläuft rohrartig um eine Längsachse 37 der Vakuumschaltröhre 3. Die Isolierhülse 5 ist aus zwei Hülsenteilen 5.1, 5.2 zusammengesetzt. Ein erster Hülsenteil 5.1 verläuft um den ersten Isolationsbereich 19 und einen ersten Teil des Mittelbereichs 13 des Schaltröhrengehäuses herum. Der zweite Hülsenteil 5.2 verläuft um den zweiten Isolationsbereich 21 und einen zweiten Teil des Mittelbereichs 13 des Schaltröhrengehäuses herum. Bei der Fertigung der Vakuumschalteinheit 1 wird der erste Hülsenteil 5.1 von der Seite des ersten Endbereichs 15 aus über das Schaltröhrengehäuse geschoben und der zweite Hülsenteil 5.2 wird von der Seite des zweiten Endbereichs 17 aus über das Schaltröhrengehäuse geschoben.

Jede Kondensatorelektrode 7, 8 verläuft innerhalb der Isolierhülse 5, das heißt eingebettet in die Isolierhülse 5, ringförmig um die Längsachse 37. Dabei werden in diesem Ausführungsbeispiel von den Kondensatorelektroden 7, 8 sechs Elektrodenpaare 41 bis 46 konzentrisch verlaufender Kondensatorelektroden 7, 8 mit einander zugewandten Elektrodenoberflächen gebildet, so dass jedes Elektrodenpaar 41 bis 46 eine innere Kondensatorelektrode 7 und eine um die innere Kondensatorelektrode 7 herum verlaufende äußere Kondensatorelektrode 8 aufweist. Die Elektrodenpaare 41 bis 46 sind bezogen auf die Längsachse 37 axial voneinander beabstandet, wobei drei Elektrodenpaare 41 bis 43 um den ersten Isolationsbereich 19 herum und drei weitere Elektrodenpaare 44 bis 46 um den zweiten Isolationsbereich 21 herum angeordnet sind.

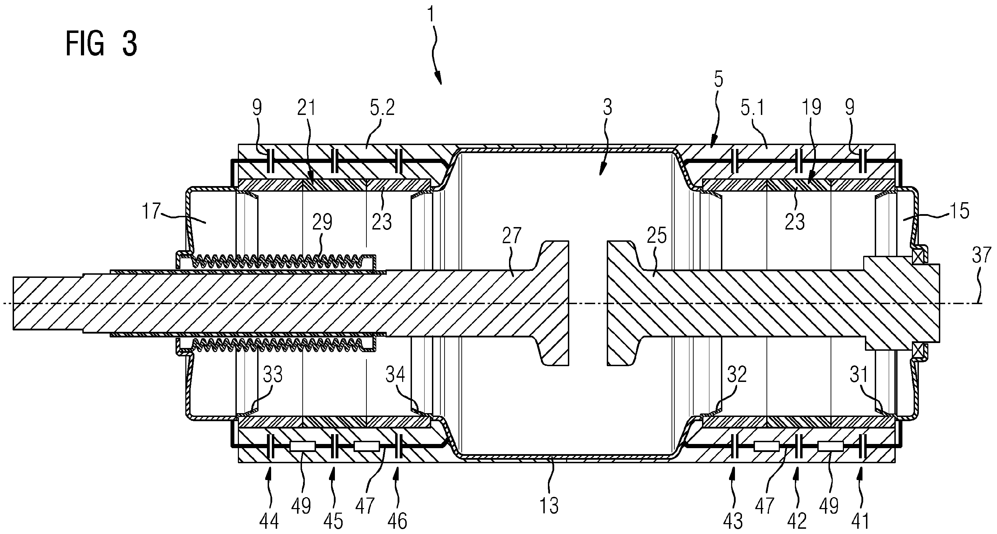

Durch in die Isolierhülse 5 integrierte elektrische Leitungen 47 sind die äußeren Kondensatorelektroden 8 eines ersten Elektrodenpaares 41 und eines zweiten Elektrodenpaares 42 elektrisch leitend miteinander verbunden. Analog sind die inneren Kondensatorelektroden 7 des zweiten Elektrodenpaares 42 und eines dritten Elektrodenpaares 43 elektrisch leitend miteinander verbunden, so dass die Elektrodenpaare 41 bis 43 elektrisch in Reihe geschaltete Kondensatoren bilden. Zwischen diese Kondensatoren und/oder parallel zu diesen Kondensatoren können ferner analog zu dem in Figur 3 gezeigten Ausführungsbeispiel elektrische Widerstände 49 geschaltet sein, die in die Isolierhülle 5 integriert sind.

Ferner ist die innere Kondensatorelektrode 7 des ersten Elektrodenpaares 41 elektrisch leitend mit dem ersten Endbereich 15 des Schaltröhrengehäuses verbunden, und die äußere Kondensatorelektrode 8 des dritten Elektrodenpaares 43 ist elektrisch leitend mit dem Mittelbereich 13 des Schaltröhrengehäuses verbunden. Statt elektrisch leitender Verbindungen können auch rein kapazitive Kopplungen dieser Kondensatorelektroden 7, 8 an die elektrischen Potentiale vorgesehen sein, auf denen der erste Endbereich 15 beziehungsweise der Mittelbereich 13 jeweils liegen.

Entsprechend sind die äußeren Kondensatorelektroden 8 eines vierten Elektrodenpaares 44 und eines fünften Elektrodenpaares 45 sowie die inneren Kondensatorelektroden 7 des fünften Elektrodenpaares 45 und des sechsten Elektrodenpaares 46 elektrisch leitend miteinander verbunden, so dass auch die Elektrodenpaare 44 bis 46 elektrisch in Reihe geschaltete Kondensatoren bilden. Auch zwischen diese Kondensatoren und/oder parallel zu diesen Kondensatoren können elektrische Widerstände 49 geschaltet sein, die in die Isolierhülle 5 integriert sind.

Ferner ist die innere Kondensatorelektrode 7 des vierten Elektrodenpaares 44 elektrisch leitend mit dem zweiten Endbereich 17 des Schaltröhrengehäuses verbunden, und die äußere Kondensatorelektrode 8 des sechsten Elektrodenpaares 46 ist elektrisch leitend mit dem Mittelbereich 13 des Schaltröhrengehäuses verbunden. Wiederum können statt elektrisch leitender Verbindungen auch rein kapazitive Kopplungen dieser Kondensatorelektroden 7, 8 an die elektrischen Potentiale vorgesehen sein, auf denen der zweite Endbereich 17 beziehungsweise der Mittelbereich 13 jeweils liegen.

Die Hülsenteile 5.1, 5.2 der Isolierhülse 5 werden zusammen mit den in sie jeweils integrierten Kondensatorelektroden 7, 8, elektrischen Leitungen 47 und gegebenenfalls den elektrischen Widerständen 49 beispielsweise durch einen 3D-Druck gefertigt. Dabei werden die Hülsenteile 5.1, 5.2 beispielsweise aus PLA, ABS, PVDF oder CPE gedruckt und die Kondensatorelektroden 7, 8, die elektrischen Leitungen 47 und gegebenenfalls die elektrischen Widerstände 49 werden aus einem elektrisch leitfähigen Filament gedruckt.

Durch das Zusammenwirkenden der Kondensatorelektroden 7, 8 wird beispielsweise eine Steuerkapazität im Bereich von 10 pF bis 500 pF realisiert.

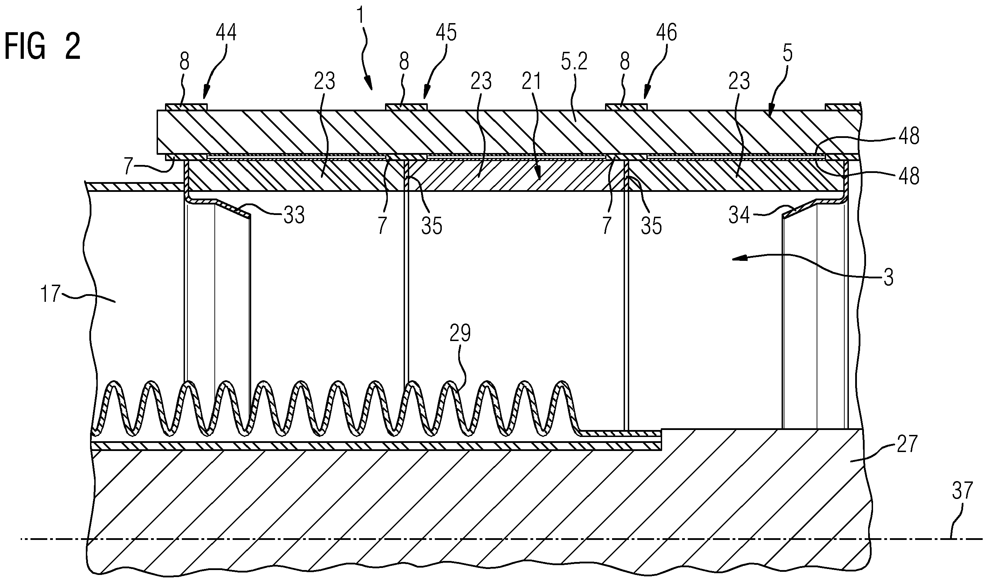

Figur 2 (FIG 2) zeigt einen Ausschnitt einer Schnittdarstellung eines zweiten Ausführungsbeispiels einer erfindungsgemäßen Vakuumschalteinheit **1.** Die Vakuumschalteinheit 1 umfasst wiederum eine Vakuumschaltröhre 3, eine die Vakuumschaltröhre 3 umgebende Isolierhülse 5 und mehrere in die Isolierhülse 5 integrierte Kondensatorelektroden 7, 8. Das in Figur 2 gezeigte Ausführungsbeispiel einer erfindungsgemäßen Vakuumschalteinheit 1 unterscheidet sich von dem in Figur 1 gezeigten Ausführungsbeispiel im Wesentlichen nur durch die Anordnung der Kondensatorelektroden 7, 8 und deren elektrische Kopplung an Schirmelektroden 31 bis 35 der Vakuumschaltröhre 3, wobei die Vakuumschaltröhre 3 zusätzlich zu den Schirmelektroden 31 bis 34 des in Figur 1 gezeigten Ausführungsbeispiels weitere Schirmelektroden 35 aufweist, die jeweils ringförmig zwischen zwei benachbarten Isolationssegmenten 23 der Isolationsbereiche 19, 21 des Schaltröhrengehäuses verlaufen.

Die Kondensatorelektroden 7, 8 bilden wiederum Elektrodenpaare 41 bis 46, wobei die Kondensatorelektroden 7, 8 jedes Elektrodenpaares 41 bis 46 konzentrisch verlaufen und einander zugewandte Elektrodenoberflächen aufweisen. Im Unterschied zu dem in Figur 1 gezeigten Ausführungsbeispiel sind die Kondensatorelektroden 7, 8 jedoch nicht innerhalb der Isolierhülse 5, das heißt eingebettet in die Isolierhülse 5, angeordnet, sondern die inneren Kondensatorelektroden 7 verlaufen ringförmig um die Längsachse 37 an einer der Vakuumschaltröhre 3 zugewandten Oberfläche der Isolierhülse 5 und die äußeren Kondensatorelektroden 8 verlaufen ringförmig um die Längsachse 37 an einer von der Vakuumschaltröhre 3 abgewandten Oberfläche der Isolierhülse 5. Ferner sind Unterschied zu dem in Figur 1 gezeigten Ausführungsbeispiel keine Kondensatorelektroden 7, 8 durch elektrische Leitungen 47 miteinander verbunden, und die inneren Kondensatorelektroden 7 der Elektrodenpaare 42, 43, 45 und 46 sind jeweils elektrisch leitend mit einer Schirmelektrode 35 verbunden, die zwischen zwei benachbarten Isolationssegmenten 23 angeordnet ist.

Erfindungsgemäß ist vorgesehen, dass nicht von Kondensatorelektroden 7 bedeckte Bereiche der Oberfläche der Isolierhülse 5, die der Vakuumschaltröhre 3 zugewandt ist, und diesen Bereichen gegenüberliegende Bereiche der Oberfläche der Vakuumschaltröhre 3, die der Isolierhülse 5 zugewandt ist, Beschichtungen 48, beispielsweise mit einem halbleitenden Material, aufweisen, die ein elektrisches Feld im Raum zwischen der Isolierhülse 5 und der Vakuumschaltröhre 3 homogenisieren. Derartige Beschichtungen 48 können auch bei den Ausführungsbeispielen vorgesehen sein, die in den Figuren 1, 3 oder 4 gezeigt sind.

Die Hülsenteile 5.1, 5.2 der Isolierhülse 5 der in Figur 2 gezeigten Vakuumschalteinheit 1 werden beispielsweise aus einem Thermoplast wie POM, PETP, PVDF oder PA6.6 oder aus Epoxidharz, das einen die Permittivität erhöhenden Füllstoff wie Bariumtitanat (BaTiO₃) aufweist, mit einem konventionellen Verfahren wie Spritzgießen gefertigt. Die Kondensatorelektroden 7, 8 werden anschließend auf die Isolierhülse 5 aufgebracht, beispielsweise als Metallelektroden oder als elektrisch leitfähige Lackschichten.

Figur 3 (FIG 3) zeigt eine Schnittdarstellung eines dritten Ausführungsbeispiels einer Vakuumschalteinheit 1. Die Vakuumschalteinheit 1 umfasst eine Vakuumschaltröhre 3, eine die Vakuumschaltröhre 3 umgebende Isolierhülse 5 und mehrere in die Isolierhülse 5 integrierte Kondensatorelektroden 9. Die Vakuumschaltröhre 3 und die Isolierhülse 5 sind wie bei dem in Figur 1 gezeigten Ausführungsbeispiel ausgebildet und werden daher hier nicht noch einmal beschrieben.

Jede Kondensatorelektrode 9 verläuft innerhalb der Isolierhülse 5, das heißt eingebettet in die Isolierhülse 5, ringförmig um die Längsachse 37. In jedem Hülsenteil 5.1, 5.2 der Isolierhülse 5 sind bezogen auf die Längsachse 37 axial voneinander beabstandet sechs Kondensatorelektroden 9 angeordnet, die drei Elektrodenpaare 41, 42, 43 beziehungsweise 44, 45, 46 bilden, die durch in das jeweilige Hülsenteil 5.1, 5.2 integrierte elektrische Leitungen 47 elektrisch in Reihe geschaltete Kondensatoren bilden. Zwischen diese Kondensatoren und/oder parallel zu diesen Kondensatoren können ferner elektrische Widerstände 49 geschaltet sein, die in die Isolierhülle 5 integriert sind.

Ferner ist jeder Endbereich 15, 17 des Schaltröhrengehäuses elektrisch leitend mit der ihm nächstgelegenen Kondensatorelektrode 9 verbunden und jedes einem Endbereich 15, 17 zugewandte Ende des Mittelbereichs 13 des Schaltröhrengehäuses ist elektrisch leitend mit der ihm nächstgelegenen Kondensatorelektrode 9 verbunden. Analog zu dem in Figur 1 gezeigten Ausführungsbeispiel können die elektrisch leitenden Verbindungen der Endbereiche 15, 17 und des Mittelbereichs 13 des Schaltröhrengehäuses mit Kondensatorelektroden 9 entfallen und werden dann durch rein kapazitive elektrische Kopplungen dieser Kondensatorelektroden 9 mit den elektrischen Potentialen, auf denen die Endbereiche 15, 17 und der Mittelbereich 13 jeweils liegen, ersetzt.

Das in Figur 3 gezeigte Ausführungsbeispiel einer Vakuumschalteinheit 1 unterscheidet sich von dem in Figur 1 gezeigten Ausführungsbeispiel somit im Wesentlichen nur dadurch, dass die beiden Kondensatorelektroden 9 jedes Elektrodenpaares 41 bis 46 nicht konzentrisch angeordnet sind, sondern axial voneinander beabstandet mit sich axial gegenüberliegenden Elektrodenoberflächen. Wie bei dem in Figur 1 gezeigten Ausführungsbeispiel werden die Hülsenteile 5.1, 5.2 der Isolierhülse 5 zusammen mit den in sie jeweils integrierten Kondensatorelektroden 9, elektrischen Leitungen 47 und gegebenenfalls den elektrischen Widerständen 49 beispielsweise durch einen 3D-Druck gefertigt.

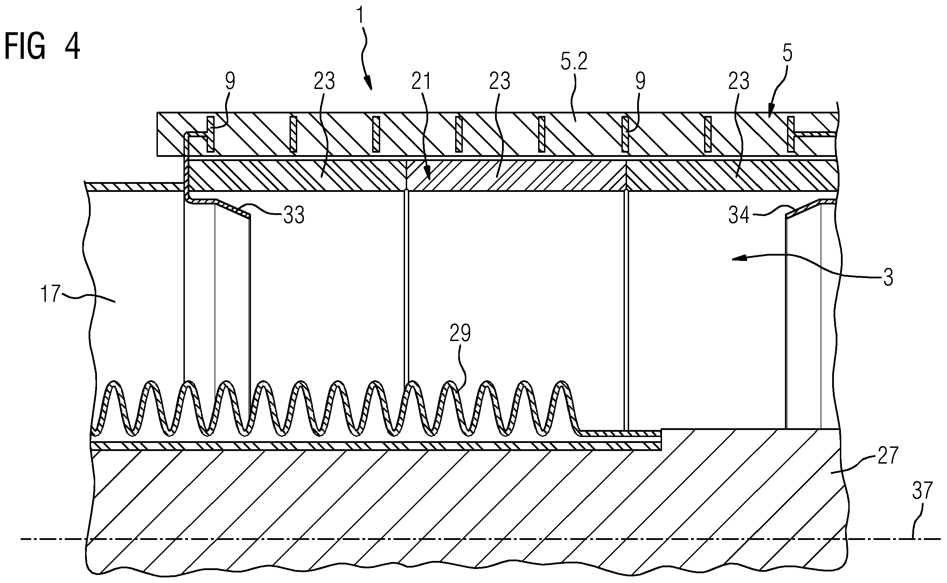

Figur 4 (FIG 4) zeigt einen Ausschnitt einer Schnittdarstellung eines vierten Ausführungsbeispiels einer Vakuumschalteinheit 1. Dieses Ausführungsbeispiel unterscheidet sich von dem in Figur 3 gezeigten Ausführungsbeispiel im Wesentlichen nur durch die Anzahl und die Abstände der in die Hülsenteile 5.1, 5.2 integrierten Kondensatorelektroden 9 sowie dadurch, dass keine Kondensatorelektroden 9 miteinander durch in die Isolierhülse 5 integrierte elektrische Leitungen 47 elektrisch leitend miteinander verbunden sind. Die elektrische Kopplung der Kondensatorelektroden 9 erfolgt hier also nur rein kapazitiv, wobei eine zwischen zwei weiteren Kondensatorelektroden 9 angeordnete Kondensatorelektrode 9 mit diesen beiden ihr benachbarten Kondensatorelektroden 9 jeweils einen Kondensator bildet.

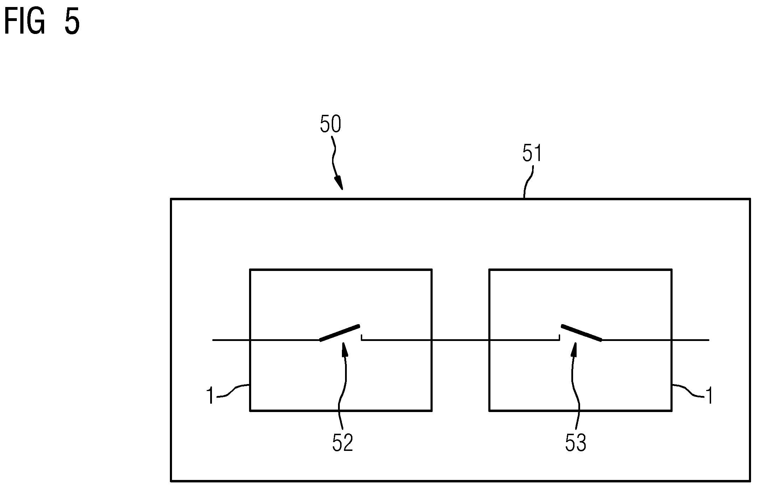

Figur 5 (FIG 5) zeigt ein Blockdiagramm eines erfindungsgemäßen Vakuumschalters 50. Der Vakuumschalter 50 weist ein Schaltergehäuse 51 auf, in dem zwei Vakuumschalteinheiten 1 angeordnet sind, die jeweils wie eine der in den Figuren 1 bis 4 gezeigten Vakuumschalteinheiten 1 ausgebildet sind und deren Schaltstrecken 52, 53 elektrisch in Reihe geschaltet sind. Das Schaltergehäuse 51 ist beispielsweise mit gereinigter und entfeuchteter Druckluft befüllt. Die bewegbaren Schaltkontaktelemente 27 der Vakuumschalteinheiten 1 sind zum Öffnen und Schließen der Schaltstrecken 52, 53 synchron, beispielsweise durch einen gemeinsamen (nicht dargestellten) Schalterantrieb, antreibbar.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die beigefügten Ansprüche definiert ist.

## Patentansprüche

1. Vakuumschalteinheit (1) eines Vakuumschalters (50), die Vakuumschalteinheit (1) umfassend
- eine Vakuumschaltröhre (3),
- eine die Vakuumschaltröhre (3) umgebende Isolierhülse (5), die rohrartig um eine Längsachse (37) der Vakuumschaltröhre (3) verläuft und aus einem Isolierstoff gefertigt ist, und
- mehrere in die Isolierhülse (5) integrierte Kondensatorelektroden (7, 8, 9),
**dadurch gekennzeichnet, dass** wenigstens ein Bereich einer der Isolierhülse (5) zugewandten Oberfläche der Vakuumschaltröhre (3) und/oder wenigstens ein Bereich einer der Vakuumschaltröhre (3) zugewandten Oberfläche der Isolierhülse (5) eine Beschichtung (48) aufweisen, die ein elektrisches Feld zwischen der Isolierhülse (5) und der Vakuumschaltröhre (3) homogenisiert.

2. Vakuumschalteinheit (1) nach Anspruch 1, wobei die Kondensatorelektroden (7, 8, 9) jeweils ringförmig oder teilringförmig um die Längsachse (37) der Vakuumschaltröhre (3) verlaufen.

3. Vakuumschalteinheit (1) nach Anspruch 1 oder 2, wobei von Kondensatorelektroden (7, 8) Elektrodenpaare (41 bis 46) konzentrisch verlaufender Kondensatorelektroden (7, 8) mit einander zugewandten Elektrodenoberflächen gebildet werden und die Elektrodenpaare (41 bis 46) konzentrisch verlaufender Kondensatorelektroden (7, 8) bezogen auf die Längsachse (37) der Vakuumschaltröhre (3) axial voneinander beabstandet sind.

4. Vakuumschalteinheit (1) nach Anspruch 3, wobei jedes Elektrodenpaar (41 bis 46) konzentrisch verlaufender Kondensatorelektroden (7, 8) von einer Kondensatorelektrode (7), die an einer der Vakuumschaltröhre (3) zugewandten Oberfläche der Isolierhülse (5) verläuft, und einer Kondensatorelektrode (8), die an einer von der Vakuumschaltröhre (3) abgewandten Oberfläche der Isolierhülse (5) verläuft, gebildet wird.

5. Vakuumschalteinheit (1) nach Anspruch 4, wobei die konzentrisch verlaufenden Kondensatorelektroden (7, 8) von auf die Isolierhülse (5) aufgebrachten elektrisch leitfähigen Lackschichten gebildet werden.

6. Vakuumschalteinheit (1) nach einem der vorhergehenden Ansprüche, wobei Kondensatorelektroden (9) bezogen auf die Längsachse (37) der Isolierhülse (5) axial voneinander beabstandet innerhalb der Isolierhülse (5) verlaufen und einander zugewandte Elektrodenoberflächen aufweisen.

7. Vakuumschalteinheit (1) nach einem der Ansprüche 3 bis 6, wobei Elektrodenpaare (41 bis 46) von Kondensatorelektroden (7, 8, 9) mit einander zugewandten Elektrodenoberflächen Kondensatoren bilden, die durch in die Isolierhülse (5) integrierte elektrische Leitungen (47) in Reihe geschaltet sind.

8. Vakuumschalteinheit (1) nach einem der vorhergehenden Ansprüche, wobei in die Isolierhülse (5) wenigstens ein elektrischer Widerstand (49) integriert ist, der durch in die Isolierhülse (5) integrierte elektrische Leitungen (47) in Reihe oder parallel zu wenigstens einem von zwei Kondensatorelektroden (7, 8, 9) gebildeten Kondensator geschaltet ist.

9. Vakuumschalteinheit (1) nach einem der vorhergehenden Ansprüche, wobei die Vakuumschaltröhre (3) wenigstens eine Schirmelektrode (31 bis 35) aufweist, die mit einer Kondensatorelektrode (7, 8, 9) elektrisch leitend verbunden und/oder kapazitiv elektrisch gekoppelt ist.

10. Vakuumschalteinheit (1) nach einem der vorhergehenden Ansprüche, wobei die Isolierhülse (5) aus einem Thermoplast oder aus Epoxidharz, das einen die Permittivität erhöhenden Füllstoff aufweist, gefertigt ist.

11. Vakuumschalteinheit (1) nach einem der Ansprüche 1 bis 9, wobei die Isolierhülse (5) zusammen mit den Kondensatorelektroden (7, 8, 9) durch einen 3D-Druck gefertigt ist.

12. Vakuumschalteinheit (1) nach einem der vorhergehenden Ansprüche, wobei die Isolierhülse (5) aus wenigstens zwei Hülsenteilen (5.1, 5.2) zusammengesetzt ist.

13. Vakuumschalter (50) mit wenigstens einer Vakuumschalteinheit (1), die gemäß einem der vorhergehenden Ansprüche ausgebildet ist.

14. Vakuumschalter (50) mit mehreren Vakuumschalteinheiten (1), die jeweils gemäß einem der Ansprüche 1 bis 13 ausgebildet sind und deren Schaltstrecken (52, 53) elektrisch in Reihe geschaltet sind.

## Claims

1. A vacuum switching unit (1) of a vacuum switch (50), the vacuum switching unit (1) comprising
- a vacuum interrupter (3),
- an insulating sleeve (5) surrounding the vacuum interrupter (3), which runs in a tubular manner about a longitudinal axis (37) of the vacuum interrupter (3) and is made of an insulating material, and
- several capacitor electrodes (7, 8, 9) integrated into the insulating sleeve (5),
**characterised in that** at least one region of a surface of the vacuum interrupter (3) facing the insulating sleeve (5) and/or at least one region of a surface of the insulating sleeve (5) facing the vacuum interrupter (3) have a coating (48) which homogenises an electric field between the insulating sleeve (5) and the vacuum interrupter (3).

2. The vacuum switching unit (1) according to claim 1, wherein the capacitor electrodes (7, 8, 9) each run annularly or partially annularly about the longitudinal axis (37) of the vacuum interrupter (3).

3. The vacuum switching unit (1) according to claim 1 or 2, wherein electrode pairs (41 to 46) of concentrically running capacitor electrodes (7, 8) with electrode surfaces facing one another are formed by capacitor electrodes (7, 8), and the electrode pairs (41 to 46) of concentrically running capacitor electrodes (7, 8) are axially spaced apart from one another with respect to the longitudinal axis (37) of the vacuum interrupter (3).

4. The vacuum switching unit (1) according to claim 3, wherein each electrode pair (41 to 46) of concentrically running capacitor electrodes (7, 8) is formed by a capacitor electrode (7) running on a surface of the insulating sleeve (5) facing the vacuum interrupter (3) and a capacitor electrode (8) running on a surface of the insulating sleeve (5) facing away from the vacuum interrupter (3).

5. The vacuum switching unit (1) according to claim 4, wherein the concentrically running capacitor electrodes (7, 8) are formed by electrically conductive lacquer layers applied to the insulating sleeve (5).

6. The vacuum switching unit (1) according to any one of the preceding claims, wherein capacitor electrodes (9) run axially spaced apart from one another within the insulating sleeve (5) with respect to the longitudinal axis (37) of the insulating sleeve (5) and have electrode surfaces facing one another.

7. The vacuum switching unit (1) according to any one of claims 3 to 6, wherein electrode pairs (41 to 46) of capacitor electrodes (7, 8, 9) with electrode surfaces facing one another form capacitors which are connected in series by electrical lines (47) integrated into the insulating sleeve (5).

8. The vacuum switching unit (1) according to any one of the preceding claims, wherein at least one electrical resistor (49) is integrated into the insulating sleeve (5) and is connected in series or parallel to at least one capacitor formed by two capacitor electrodes (7, 8, 9) by electrical lines (47) integrated into the insulating sleeve (5).

9. The vacuum switching unit (1) according to any one of the preceding claims, wherein the vacuum interrupter (3) has at least one shield electrode (31 to 35) which is electrically conductively connected and/or capacitively electrically coupled to a capacitor electrode (7, 8, 9).

10. The vacuum switching unit (1) according to any one of the preceding claims, wherein the insulating sleeve (5) is made of a thermoplastic or epoxy resin which has a filler increasing the permittivity.

11. The vacuum switching unit (1) according to any one of claims 1 to 9, wherein the insulating sleeve (5) is made together with the capacitor electrodes (7, 8, 9) by 3D printing.

12. The vacuum switching unit (1) according to any one of the preceding claims, wherein the insulating sleeve (5) is composed of at least two sleeve parts (5.1, 5.2).

13. A vacuum switch (50) with at least one vacuum switching unit (1) configured according to any one of the preceding claims.

14. A vacuum switch (50) with several vacuum switching units (1) which are each configured according to any one of claims 1 to 13 and whose switching paths (52, 53) are electrically connected in series.

## Revendications

1. Unité de commutation sous vide (1) d'un disjoncteur sous vide (50), l'unité de commutation sous vide (1) comprenant
- une ampoule à vide (3),
- une douille isolante (5) entourant l'ampoule à vide (3), laquelle s'étend de manière tubulaire autour d'un axe longitudinal (37) de l'ampoule à vide (3) et est réalisée dans un matériau isolant, et - plusieurs électrodes de condensateur (7, 8, 9) intégrées dans la douille isolante (5),
**caractérisée en ce qu'**au moins une zone d'une surface de l'ampoule à vide (3) faisant face à la douille isolante (5) et/oder au moins une zone d'une surface de la douille isolante (5) faisant face à l'ampoule à vide (3) présentent un revêtement (48) qui homogénéise un champ électrique entre la douille isolante (5) et l'ampoule à vide (3).

2. Unité de commutation sous vide (1) selon la revendication 1, dans laquelle les électrodes de condensateur (7, 8, 9) s'étendent chacune de manière annulaire ou partiellement annulaire autour de l'axe longitudinal (37) de l'ampoule à vide (3).

3. Unité de commutation sous vide (1) selon la revendication 1 ou 2, dans laquelle des paires d'électrodes (41 à 46) d'électrodes de condensateur (7, 8) s'étendant de manière concentrique sont formées par des électrodes de condensateur (7, 8) avec des surfaces d'électrodes se faisant face, et les paires d'électrodes (41 à 46) d'électrodes de condensateur (7, 8) s'étendant de manière concentrique sont espacées axialement les unes des autres par rapport à l'axe longitudinal (37) de l'ampoule à vide (3).

4. Unité de commutation sous vide (1) selon la revendication 3, dans laquelle chaque paire d'électrodes (41 à 46) d'électrodes de condensateur (7, 8) s'étendant de manière concentrique est formée par une électrode de condensateur (7), qui s'étend sur une surface de la douille isolante (5) faisant face à l'ampoule à vide (3), et par une électrode de condensateur (8), qui s'étend sur une surface de la douille isolante (5) opposée à l'ampoule à vide (3).

5. Unité de commutation sous vide (1) selon la revendication 4, dans laquelle les électrodes de condensateur (7, 8) s'étendant de manière concentrique sont formées par des couches de laque électriquement conductrices appliquées sur la douille isolante (5).

6. Unité de commutation sous vide (1) selon l'une des revendications précédentes, dans laquelle des électrodes de condensateur (9) s'étendent à l'intérieur de la douille isolante (5) en étant espacées axialement les unes des autres par rapport à l'axe longitudinal (37) de la douille isolante (5) et présentent des surfaces d'électrodes se faisant face.

7. Unité de commutation sous vide (1) selon l'une des revendications 3 à 6, dans laquelle des paires d'électrodes (41 à 46) d'électrodes de condensateur (7, 8, 9) ayant des surfaces d'électrodes se faisant face forment des condensateurs qui sont connectés en série par des lignes électriques (47) intégrées dans la douille isolante (5).

8. Unité de commutation sous vide (1) selon l'une des revendications précédentes, dans laquelle au moins une résistance électrique (49) est intégrée dans la douille isolante (5), laquelle est connectée en série ou en parallèle à au moins un condensateur formé par deux électrodes de condensateur (7, 8, 9) par des lignes électriques (47) intégrées dans la douille isolante (5).

9. Unité de commutation sous vide (1) selon l'une des revendications précédentes, dans laquelle l'ampoule à vide (3) présente au moins une électrode d'écran (31 à 35) qui est reliée de manière électriquement conductrice et/ou couplée électriquement de manière capacitive à une électrode de condensateur (7, 8, 9).

10. Unité de commutation sous vide (1) selon l'une des revendications précédentes, dans laquelle la douille isolante (5) est réalisée en un thermoplastique ou en une résine époxy présentant une charge augmentant la permittivité.

11. Unité de commutation sous vide (1) selon l'une des revendications 1 à 9, dans laquelle la douille isolante (5) ainsi que les électrodes de condensateur (7, 8, 9) sont réalisées par une impression 3D.

12. Unité de commutation sous vide (1) selon l'une des revendications précédentes, dans laquelle la douille isolante (5) est composée d'au moins deux parties de douille (5.1, 5.2).

13. Disjoncteur sous vide (50) comprenant au moins une unité de commutation sous vide (1) réalisée conformément à l'une des revendications précédentes.

14. Disjoncteur sous vide (50) comprenant plusieurs unités de commutation sous vide (1) qui sont chacune réalisées conformément à l'une des revendications 1 à 13 et dont les distances de coupure (52, 53) sont connectées électriquement en série.
